# EUROPÄISCHE PATENTSCHRIFT

(11) **EP 0 896 281 B1**
(45) Veröffentlichungstag und Bekanntmachung des Hinweises auf die Patenterteilung: **01.10.2003**
(21) Anmeldenummer: 98114097.3
(22) Anmeldetag: 28.07.1998
(51) Int. Cl.: G11C 7/18

(54) **Datenbus in einem Rechnersystem**
Data bus in a computer system
Bus de données dans un système d'ordinateur

(30) Priorität: 04.08.1997 DE 19733708
(43) Veröffentlichungstag der Anmeldung: 10.02.1999
(73) Patentinhaber: Infineon Technologies AG, 81669 München (DE)
(72) Erfinder: Heyne, Patrick, 81541 München (DE); Haerle, Dieter, 81541 München (DE); Graetz, Thoralf, 01307 Dresden (DE)
(74) Vertreter: Kottmann, Heinz Dieter, Dipl.-Ing.

(56) Entgegenhaltungen:
- EP-A- 0 685 851
- US-A- 5 550 488

## Beschreibung

Die Erfindung betrifft einen Datenbus aus n+1 (n ≧ 2) Leitungen, die n true-only-Leitungen und eine Kontrolleitung (single complement) bilden und von n Eingangsblöcken zu n Ausgangsblöcken führen.

Datenbusse werden aus Designgründen oft aus "true/complement-Leitungen" aufgebaut, bei denen zur Übertragung von einem Datenbit zwei Leitungen zwischen einem Eingangsblock und einem Ausgangsblock erforderlich sind. Damit können die Daten nach dem Ausgangsblock gegebenenfalls differentiell weiterverarbeitet werden.

Ein solcher Ausgangsblock ist aus US 5 550 488 bekannt.

Auch macht es eine solche Anordnung von zwei Leitungen zur Übertragung eines Datenbits möglich, für jedes Datenbit anzugeben, wann dieses auf dem Bus gültig ist oder nicht. Für eine zuverlässige Datenübertragung ist es nämlich wichtig zu wissen, wann die jeweiligen Daten auf dem Bus gültig sind und wann nicht.

Um diese Gültigkeitsprüfung durchzuführen, kann beispielsweise ein unbenutzter Zustand der beiden zueinander komplementären Datenleitungen verwendet werden, um anzuzeigen, daß keine gültigen Daten auf dem Bus vorhanden sind. Dies kann beispielsweise geschehen, indem ein Zustand "hoch" ("high") den beiden komplementären Datenleitungen zur Anzeige dieses unbenutzten Zustandes zugeordnet wird. Nimmt nun eine der beiden Leitungen den anderen Pegel "niedrig" ("low") an, so kann daraus ersehen werden, daß ein gültiges Datenbit vorliegt.

Mit anderen Worten, wenn beide Leitungen den Zustand "hoch" haben, so bedeutet dies, daß keine gültigen Daten auf dieser Leitung des Busses sind. Haben die beiden Leitungen aber unterschiedliche Pegel, nämlich "hoch" und "niedrig", so kann daraus ersehen werden, daß ein gültiges Datenbit über diese Leitungen übertragen werden soll.

Selbstverständlich ist es auch möglich, die Potentiale umzukehren, also etwa einen Zustand "niedrig" vorzusehen, um anzuzeigen, daß keine gültigen Daten auf den jeweiligen Leitungen sind.

Da aber P-Kanal-MOS-Transistoren weniger stromergiebig sind, wird in bevorzugter Weise in der zeitunkritischen Vorladephase aufgeladen und in der zeitkritischen Schaltphase über n-Kanal-MOS-Transistoren, die schneller als P-Kanal-MOS-Transistoren sind, wieder entladen. Der Zustand "hoch" wird also bevorzugt, um anzuzeigen, daß keine Daten auf den jeweiligen Leitungen des Busses sind.

Zusammenfassend ergibt sich also, daß an sich zur Übertragung eines Datenbits jeweils zwei Leitungen eines Datenbusses vorgesehen werden sollten: Bei gleichem Zustand der beiden Leitungen wird angezeigt, daß ein übertragenes Datenbit ungültig ist, während ein unterschiedlicher Zustand der beiden Leitungen meldet, daß das übertragene Datenbit als gültig zu bewerten ist.

Bei einer längeren Verdrahtung mit einem Bus zwischen zwei Blöcken mit jeweils zwei Leitungen für ein Datenbit wird viel Fläche benötigt, so daß ein derartiges Vorgehen aus diesem Grund unzweckmäßig ist. Wird aber nur eine Leitung je Datenbit vorgesehen, so fehlt die Information, wann ein jeweiliges Datenbit als gültig anzusehen ist oder nicht.

Aus diesem Grund wird bisher daran gedacht, lediglich eine Leitung je Bit vorzusehen ("true only") und zusätzlich ein Kontrollsignal zu erzeugen. Dies hat den Vorteil, daß zur Übertragung von n Datenbits anstelle von zwei n Leitungen nur noch n+1 Leitungen erforderlich sind. Von Bedeutung ist nun, wie ein solches Kontrollsignal erzeugt wird. Wird es nämlich aus einem anderen Hilfssignal abgeleitet, so muß sichergestellt sein, daß die Datenbits vor dem Kontrollsignal gültig sind, was durch den Einsatz von Verzögerungsgliedern erreicht werden kann. Ein derartiges Vorgehen führt aber notwendigerweise zu einem Zeitfenster, so daß die Datenübertragung insgesamt langsamer wird.

Es ist daher Aufgabe der vorliegenden Erfindung, einen Datenbus der eingangs genannten Art so zu verbessern, daß er bei geringem Flächenbedarf und einfachem Aufbau eine rasche Datenübertragung einschließlich der Information, wann ein Datenbit gültig ist, erlaubt.

Diese Aufgabe wird bei einem Datenbus der eingangs genannten Art erfindungsgemäß dadurch gelöst, daß einem Eingangsblock, der am Anfang des Datenbusses liegt und die längste Signallaufzeit hat und dem eine true-only-Leitung und die Kontrollleitung zugeordnet sind, eine NAND-Verknüpfung nachgeschaltet ist, deren Ausgang jeweils mit jedem Ausgangsblock verbunden ist. Die Ausgangsblöcke können dabei jeweils Tri-State-Inverter aufweisen, die durch das Kontrollsignal gesteuert sind.

Bei dem erfindungsgemäßen Datenbus sind also die Datenausgänge des ersten Eingangsblockes - wie bereits oben erläutert wurde - "true" und "complement". Der Bus selbst besteht aus den true-only-Leitungen und einer Kontrolleitung, der "single-complement"-Leitung. Diese Kontrolleitung ist aus Gründen der Signallaufzeit die komplementäre Leitung des am Anfang des Busses liegenden Datenbits, so daß sichergestellt ist, daß im Empfangsblock das Kontrollsignal nach den jeweiligen Datenbits eintrifft. In den Empfangsblöcken wird so jedem folgenden Datenbit zusätzlich das vom ersten Eingangsblock gelieferte Kontrollsignal über die NAND-Verknüpfung zugeführt und dort ausgewertet. Sobald eines der Signale, die der NAND-Verknüpfung zugeführt sind, den Zustand "niedrig" annimmt, während das andere Signal den Zustand "hoch" beibehält, bedeutet dies, daß die Datenbits des jeweiligen Eingangsblockes gültig sind. Die NAND-Verknüpfung der Datenbits am Anfang des Busses liefert also frühzeitig das fertige Kontrollsignai mit dem Aufwand von nur einem NAND-Gatter. Die NAND-Verknüpfung liegt so beim ersten Datenbit im Empfangsblock und leitet das Kontrollsignal an die anderen Bits der Empfangsblöcke weiter.

Wesentlich an der Erfindung ist also die Erzeugung des Kontrollsignales direkt aus dem ohnehin vorhandenen true/complement-Daten ohne andere Hilfssignale, wobei nur ein minimaler Schaltungsaufwand mit einer NAND-Verknüpfung nötig ist und die Signallaufzeiten insofern berücksichtigt sind, als die NAND-Verknüpfung dem Eingangsblock am Anfang des Busses nachgeschaltet ist. Zeitverzögerungen infolge eines Zeitfensters treten nicht auf, so daß eine schnelle Datenübertragung gewährleistet ist.

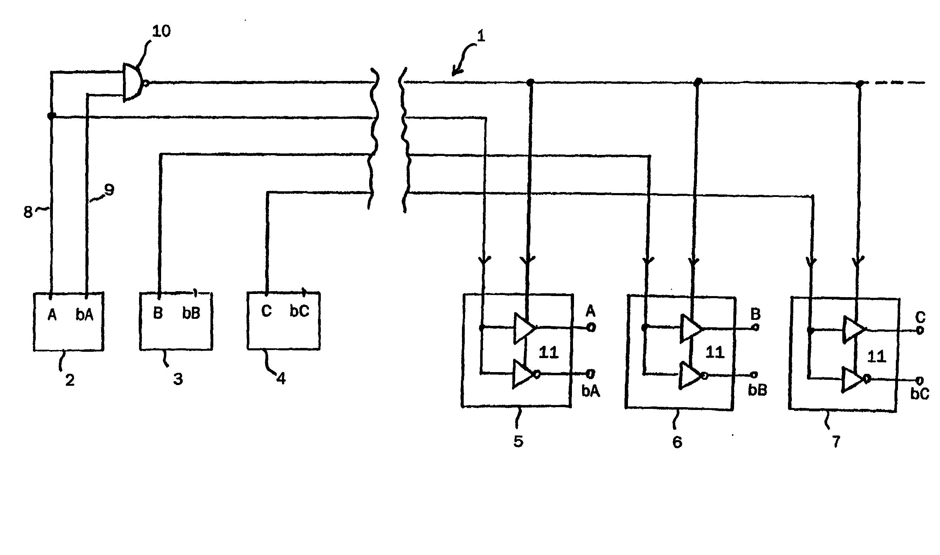

Nachfolgend wird die Erfindung anhand der Zeichnung näher erläutert, in deren einziger Figur schematisch ein erfindungsgemäßer Datenbus mit Eingangsblöcken und Ausgangsblöcken gezeigt ist.

Die Figur zeigt einen Datenbus 1 aus Leitungen, die von Eingangsblöcken 2, 3, 4 zu Ausgangsblöcken 5, 6, 7 führen. Selbstverständlich können auch mehr als drei Eingangsblöcke bzw. Ausgangsblöcke vorgesehen sein. Den Eingangsblock 2 mit den am Anfang des Datenbusses 1 liegenden Datenbits A sind zwei komplementäre Leitungen 8, 9 nachgeschaltet, die zu einem NAND-Gatter 10 führen. Sind beide Leitungen 8, 9 in einem "hohen" Zustand, so bedeutet dies, daß keine gültigen Daten auf diesen Leitungen vorhanden sind. Sobald eine der Leitungen 8, 9 den anderen Pegel, also niedrig, annimmt, so zeigt dies an, daß ein gültiges Datenbit vorhanden ist.

Der Ausgang des NAND-Gatters 10 ist zu den einzelnen Ausgangsblöcken 5, 6, 7 und dort zu jeweiligen Tri-State-Invertern 11 geführt. Dadurch sind in jedem Empfangsblock 6, 7 jedem Datenbit "B" bzw. "C" zusätzlich die Datenbits "A" und "bA" über das NAND-Gatter 10 zugeführt und können so in den Empfangsblöcken 6, 7 ausgewertet werden: sobald eines der Datenbits "A" bzw. "bA" auf den Leitungen 8, 9 niedrig wird, so bedeutet dies, daß die Datenbits "B" bzw. "C" als gültig anzusehen sind.

Von Bedeutung ist, daß das NAND-Gatter der Datenbits "A" bzw. "bA" direkt am Ausgang des Datenbits "A" des ersten Eingangsblockes gelegen ist, so daß das fertige Kontrollsignal, nämlich das Ausgangssignal des NAND-Gatters 10 schon frühzeitig erzeugt wird. Auf diese Weise ist die Versorgung aller Ausgangsblöcke 6, 7 mit dem Kontrollsignal gewährleistet.

wie zu ersehen ist, wird bei dem erfindungsgemäßen Datenbus lediglich ein NAND-Gatter 10 benötigt, das dem am Anfang des Busses liegenden Datenbit "A" zugeordnet ist und das Kontrollsignal für die anderen Bits weiterleitet.

Dem NAND-Gatter 10 kann gegebenenfalls noch ein weiteres Verzögerungsglied, wie beispielsweise zwei in Reihe liegende Inverter. nachgeschaltet werden, um so eine zusätzliche Verzögerung einzuführen.

## Patentansprüche

1. Datenbus aus n+1 (n ≧ 2) Leitungen, die n true-only-Leitungen bilden und von n Eingangsblöcken (2, 3, 4) zu n Ausgangsblöcken (5, 6, 7) führen,
**dadurch gekennzeichnet, daß**
einem Eingangsblock (2), der am Anfang des Datenbusses (1) liegt und die längste Signallaufzeit hat und dem eine true-only-Leitung und die Kontrolleitung zugeordnet sind, eine NAND-Verknüpfung (10) nachgeschaltet ist, deren Ausgang jeweils mit jedem Ausgangsblock (5, 6, 7) verbunden ist.

2. Datenbus nach Anspruch 1, **dadurch gekennzeichnet, daß** die Ausgangsblöcke (5, 6, 7) jeweils Tri-State-Inverter (11) aufweisen, die durch das Kontrollsignal gesteuert sind.

3. Datenbus nach Anspruch 1 oder 2, **dadurch gekennzeichnet, daß** der NAND-Verknüpfung weitere Verzögerungsglieder, insbesondere zwei in Reihe liegende Inverter, nachgeschaltet sind.

## Claims

1. Databus comprising n+1 (n ≥ 2) lines which form n true-only lines and lead from n input blocks (2, 3, 4) to n output blocks (5, 6, 7)
**characterized in that**
an input block (2) which is located at the start of the databus (1) and has the longest signal delay time and to which a true-only line and the monitoring line are assigned has connected downstream of it an NAND gate (10) whose output is in each case connected to each output block (5, 6, 7).

2. Databus according to Claim 1, **characterized in that** the output blocks (5, 6, 7) each have tristate inverters (11) which are controlled by the monitoring signal.

3. Databus according to Claim 1 or 2, **characterized in that** the NAND gate has connected downstream of. it further delay elements, in particular two series-connected inverters.

## Revendications

1. Bus de données constitué de (n + 1) (n ≥ 2) conducteurs qui forment n conducteurs "true-only" et qui mènent de n blocs (2, 3, 4) d'entrée à n blocs (5, 6,7) de sortie,
**caractérisé en ce que** :
en aval d'un bloc (2) d'entrée, qui se trouve au début du bus (1) de données et qui a la durée de parcours du signal la plus grande et auquel sont associées une ligne "true-only" et la ligne de contrôle, est monté un élément (10) logique "non et" dont la sortie est reliée respectivement à chaque bloc (5, 6, 7) de sortie.

2. Bus de données suivant la revendication 1,
**caractérisé en ce que** les blocs (5, 6, 7) de sortie ont respectivement des inverseurs (11) à trois états qui sont commandés par le signal de contrôle.

3. Bus de données suivant la revendication 1 ou 2, **caractérisé en ce qu'**en aval de l'élément logique "non et" sont montés d'autres éléments de temporisation, notamment deux inverseurs en série.
